(19) Europäisches Patentamt
European Patent Office
Office européen des brevets

(11) **EP 1 419 027 B1**

(12) **EUROPEAN PATENT SPECIFICATION**

(45) Date of publication and mention
of the grant of the patent:
**20.05.2009 Bulletin 2009/21**

(21) Application number: **01969691.3**

(22) Date of filing: **21.08.2001**

(51) Int Cl.:
***B23K 9/095*** *(2006.01)*    ***B23K 9/028*** *(2006.01)*

(86) International application number:
**PCT/EP2001/010182**

(87) International publication number:
**WO 2003/018244 (06.03.2003 Gazette 2003/10)**

(54) **PROCESS AND DEVICE FOR WELDING ARC CONTROL BY DETERMINING THE INSTANTANEOUS CURRENT AND VOLTAGE**

PROZESS UND GERÄT ZUR STEUERUNG EINES SCHWEISSLICHTBOGENS DURCH ERMITTLUNG DER MOMENTANEN STROMSTAERKE UND SPANNUNG

PROCEDE ET DISPOSITIF DE REGLAGE DE L'ARC DE SOUDAGE PAR DETERMINATION DE L'INTENSITE ET DE LA TENSION INSTANTANEES

(84) Designated Contracting States:
**AT BE CH CY DE DK ES FI FR GB GR IE IT LI LU MC NL PT SE TR**

(43) Date of publication of application:
**19.05.2004 Bulletin 2004/21**

(73) Proprietor: **Serimax**
**77290 Mitry-Mory (FR)**

(72) Inventors:
• **RICHARD, Gilles**
**F-77290 Mitry-Mory (FR)**

• **RICHARD, Claude**
**F-77290 Mitry-Mory (FR)**

(74) Representative: **Fosse, Danièle et al**
**Cabinet Blétry & Associés**
**23, rue du Renard**
**75004 Paris (FR)**

(56) References cited:
**WO-A-00/38872**          **GB-A- 2 170 437**
**US-B1- 6 248 976**      **US-B1- 6 274 845**

**Description**

**BACKGROUND OF THE INVENTION**

**Field of the Invention**

An arc welding process and a device for butt welding of parts, especially designed for orbital butt welding of tubes for piping applications.

**Brief Description of The Prior Art**

**1. Preliminary**

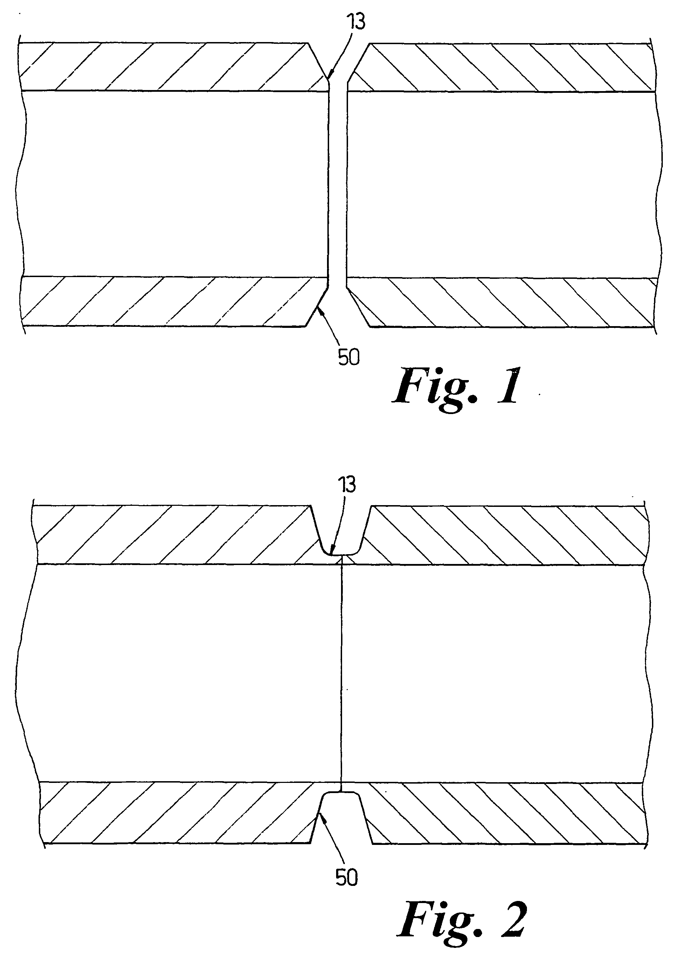

Welding has been used for many years. As it is well know in the art, when butt welding parts, the items to be welded must be held in position relative to one another. In the case of the parts being tubes welded together, a clamp is used for this purpose, generally placed inside the tubes and positioned at the junction of the two tubes. This clamp is equipped with rows of pistons, each row holding a tube.
The ends of the parts to be welded may first be chamfered 50 (depending on the thickness of the parts, the arc welding process used, the procedure - automatic or manual - and the like), to form ring 13. See Figures 1 and 2 for illustrations of the prior art components that are welded together.

**2. Welding Principle**

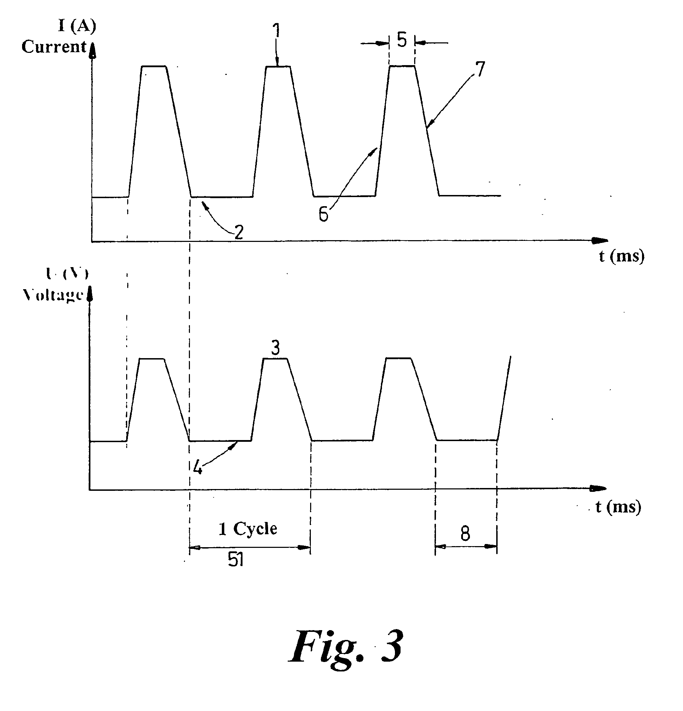

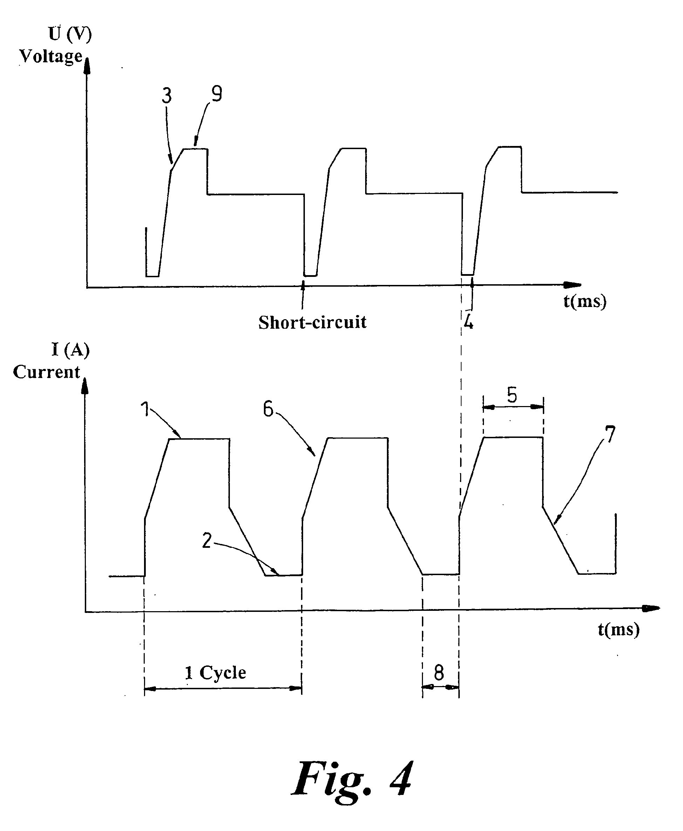

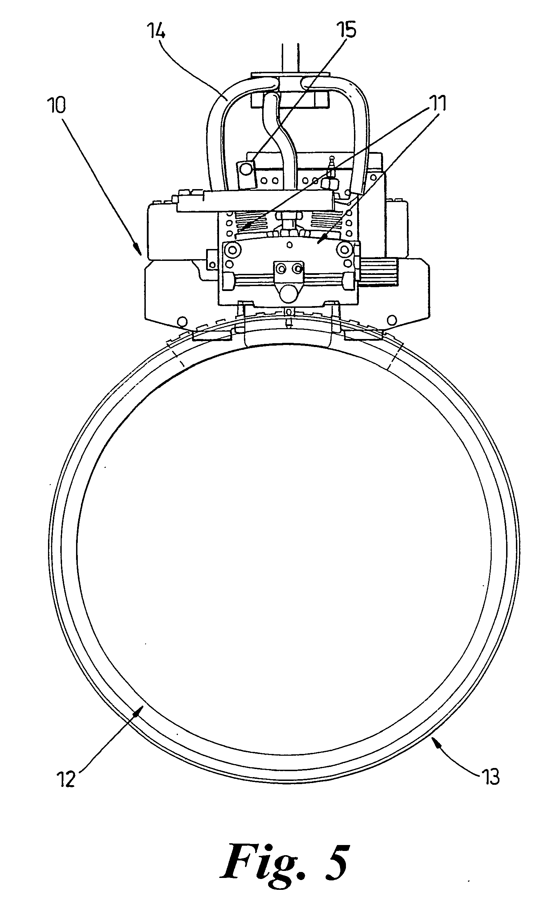

The process used for butt welding parts of the present invention is the MIG/MAG or GMAW metal arc welding with gas shield process. A metal wire 25 is connected at the weld torch 11 to one of the polarities of a power source and is fed to the welding location. An electric arc is created between this wire and the parts to be assembled, which parts are at the polarity different from that of the wire polarity (See Figure 5 for an illustration of the prior art equipment and process discussed in more detail below).
The electric arc causes the wire (sometimes referred to as the "filler metal") to melt, as well as partial melt of the parts to be assembled. The wire feed rate (called $V_f$) is made equal to its melt rate so as to provide for a stable arc. The first weld bead, which produces a perfect joint at the inner skin (with admissible imperfections according to implemented standard) between two chamfered parts is know as "the penetration pass."
The current wave delivered by the generator is either continuous or sequential. Arc welding is a periodic phenomenon whose period is a few hundredths of a second. During the welding process, the electrical parameters therefore also vary in a periodic fashion.
The current and voltage waveforms of the welding arc change according to the type of transfer of the weld metal from the filler metal (See Figures 3 and 4) .

**3. Types of Generators Used**

MIG / MAG arc welding generators capable of generating sequential type arc modes (including the pulse and/or controlled short-circuit modes) illustrate the ability to have controlled waveforms as shown in Figures 3 and 4.
Parameters adjustable by the operator on such generators as shown in Figures 3 and 4 are:

Ipeak 1, Ibase 2, Upeak 3, Ubase 4, peak time 5, up ramp 6, down ramp 7 (depending on source manufacturers), $V_f$, frequency (inverse of cycle 51) (adjustable or self-regulated), cool time 8 (adjustable or self-regulated).

In automatic welding, overall parameters managed by the program logic controller ("PLC") are:

Welding unit speed (equivalent to welding speed), oscillation amplitude and frequency of the welding torch.

For Sequential mode: pure pulse mode (Figure 3), the pulse phase corresponds to the Ipeak dwell time 5.
For Sequential mode: controlled short-circuit (Figure 4), Upeak: peak voltage. Voltage value 3 at which the current stops increasing, i.e. voltage at the inception of Ipeak 1. Umax 9: maximum achieved voltage. This is a phenomenon due to system inertia.
The pulse phase starts when the voltage becomes equal to Upeak and ends at the end of Ipeak.
In such generators, an intelligent system (microprocessor + programmable logic device, for example) allows certain parameters (Ipeak, frequency, cool time, and the like) to be adapted in real time according to the weld pool conditions (thermal emissivity of the weld pool, for example).

**4. For Tube Welding (Penetration Pass), Several Techniques are Available**

None of the techniques presented below makes use of real-time, self-assessment of the penetrating power of the electric welding arc.

a. Welding from the inside:

An inner welding clamp is used. The clamp is usually equipped with two rows of pistons to hold the tubes in position. Further, mobile welding torches are mounted on the clamp for the purpose of completing the penetration from the inside. Parameters can be changed to fit predefined angular positions. The problem with this are that implementing this device is a complex process (positioning in the mating plane is difficult, centering of the welding torches, no direct check possible during welding, poor cost-effectiveness, complex machine with limited diameter range, and the like).

b. Welding from the outside:

(1) For high wire feed rates, e.g. in the case of mechanized or automatic welding where the welding head movements are controlled by a carriage-type electromechanical assembly, the weld pool must be maintained using backing strips (copper, ceramics, and the like) to prevent the weld pool from collapsing. The backing strips are slaved to the piston rows and applied flat against the back of the joint to be welded when the pistons extend. During welding, parameters can be changed to fit predefined angular positions. The problem is that regardless of the type of medium, the backing strips gradually deteriorate as welding passes accumulate with current MIG-MAG type arc welding processes.

(2) In manual welding, or in automatic welding at low wire feed rates, the outside can be welded without backing strips. The welders are generally assisted by an operator who is requested to adjust the mean welding current according to the weld pool behavior. The problem is that low output occurs, with a welder-dependent process.

In the prior art, whether welding from the outside or from the inside, the welding parameters can be regulated according to the weld pool conditions (temperature, luminosity...etc.) or the bevel shape (width, gap, high-low...etc.) to control the penetration. To do so, some sensors (thermographic vision, laser, camera, pictures/vision analysis and the like) are available and can be used to measure the thermal evolution of the weld pool, the bevel shape evolution, and the like in real time while welding.

But these devices which need to be handled by the welding system are more cumbersome, fragile, expensive, and less time responsive to adapt the parameters.

**5. Example of Configuration of Automatic Outside Welding**

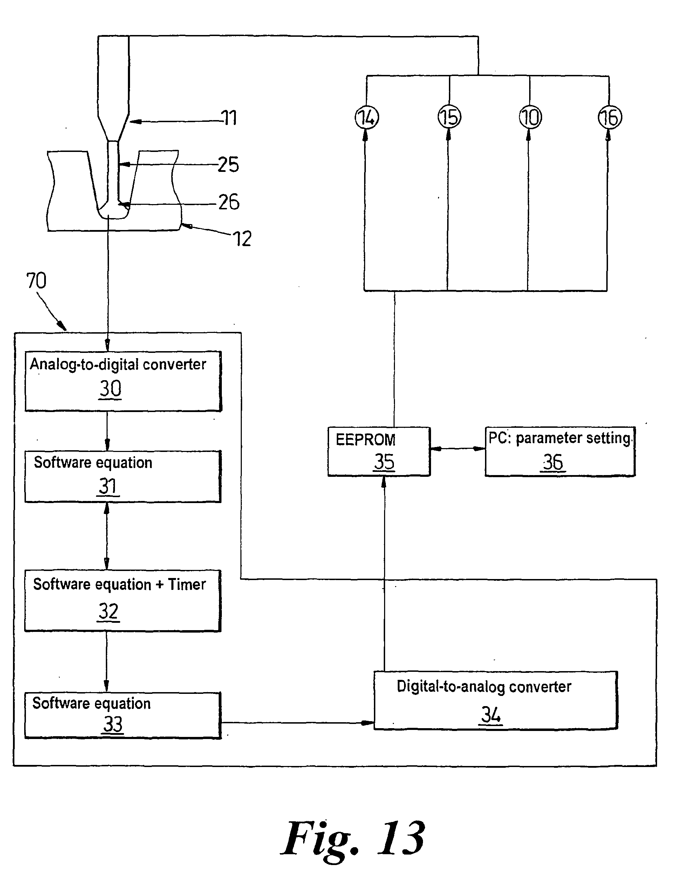

As shown in Figures 5 and 13, a motor-driven welding unit 10 is mounted on fixed tube 12 by means well known in the art. It is connected to a welding generator 14 and a wire reel 15. It is equipped with one or several welding torches 11 and moves along a ring 13 integral with the fixed tube 12, the welding unit 10 welds, for example, a half-circumference of ring 13.

**6. General Problems Experienced When Completing the Penetration Pass**

a. A requirement exists to control weld pool fluidity in all positions (orbital welding).

Fast cooling is controlled by varying the welding arc heat input. With no support, or with a support made of a low thermal conduction material, cooling of the weld pool during the penetration pass is slower than on a metal support (such a copper). The weld pool must therefore otherwise cool off fast enough to limit the effect of gravity on the fluid pool, thus preventing it from collapsing and avoiding gaps, overpenetration and concavity.

b. The electric arc penetrating power varies as a function of angular position.

Even under perfect pipe fit-up conditions (no gaps or high-low areas), the penetrating power of an electric arc is not constant. According to the local angular tilt of the interface of the parts to be welded, the position of the weld pool relative to the arc varies. Thus, for example, for tube welding, at the 12 and 6 o'clock positions, the weld pool is located vertically juxtaposed to the arc, as it is pushed away by the arc pressure: in this case, the arc penetrating power into the metal is high.

Conversely, at the 3 and 9 o'clock positions, the weld pool tends to run under the arc, owing to gravity, as the pressure exerted by the arc is not always adequate, according to the pool fluidity, to push the weld pool back. The arc penetrating power is therefore reduced as compared to the 12 and 6 o'clock positions, under comparable fit-up conditions.

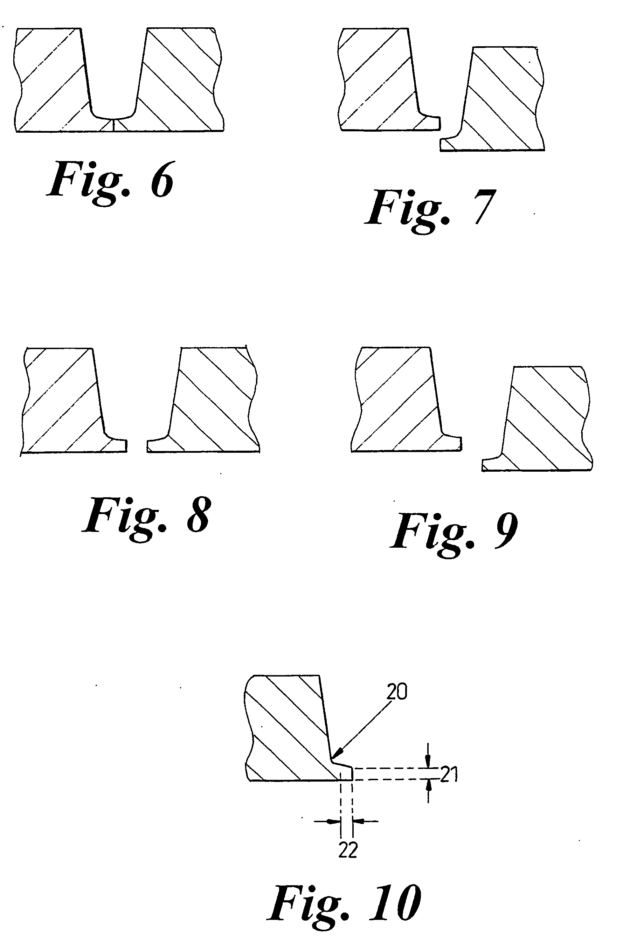

c. Penetration is harder to achieve on fit-up defects (See Figures 6, 7, 8 and 9 for illustrations of defects).

In the presence of fit-up defects (gap and/or high-low), the welding arc penetrating power naturally increases, and the weld pool cooling rate is slower (as side thermal pumping by the parent metal is less effective), and gaps may be created (owing to the lack of metal or collapse of the weld pool). When using backing strips, the backing strips may be severely damaged as the electric arc comes into contact with them.

d. Penetration is harder when the machining dimensions of the ends to be assembled vary.

The values of the various machined dimensions of the ends to be assembled, essentially those of the part to be fused during the penetration pass (usually referred to as the root face), i.e. the dimensions of the chamfers (Figure 10) such as root face 21, lip 22, radius 20, must, as far as practicable, need to be accurate so as to ensure the quality in manual or automated welding. In production, however, the machining conditions for chamfers and the critical root face are often less than ideal and defects may occur. Thus, if the root face thickness is smaller and/or if the width of the lip is greater than nominal values, the ability of the parent metal to cool off the weld pool will be lessened and the electric arc penetrating power will subsequently increase, with the additional risk of creating defects such as gaps or collapsing, under substantially constant mean welding arc electrical parameters.

Conversely, if the root face is thicker and/or the lip narrower than the nominal values, the ability of the parent metal to cool off the weld pool will increase and the arc penetrating power decrease, but a risk exists that not all the parent metal will melt (i.e. the total thickness of the root face), thus creating a defect known as lack of penetration.

It is an object of the present invention to control the weld pool by simple sensory readings and to adapt the welding parameters to changes in the weld pool conditions.

It is a further object of the present invention to have such control using reliable sensors to consistently regulate in real time the weld pool conditions through the welding parameters.

7. Prior art

The document US 6 248 976 discloses a method of controlling arc welding process using the volt/ampere characteristics curve. The aim of this method is to maintain the distance between the bottom of the electrode and the work-piece (the arc length) at a fixed value, which will result in superior and repeatable weld quality. In this way, the current or voltage is perturbated and measured at different times, then the average of the measures is done so as to obtain a better resolution and noise immunity. This document discloses the features of the preambles of independent claims 1 and 20.

WO 00/38872 discloses an arc welding process for underwater pipelines or inland pipelines. The process consists in forming joints whose strength is higher, the strength depending upon various factors, one being the geometry of the path traced by the point of contact of the arc in relation to the surfaces of the pipes to be joined. A control unit receives signals representing electrical characteristics (voltage, potential difference, current, arc impedance) of the welding with regard of several pipes and facilitates automatic guidance of the arc of each torch along the groove by comparing the signals relating to one of the pipes with the corresponding signals relating to the other of the pipes.

In respect of each torch, the control unit compares the values of the differences calculated, at each instant, with preset values held in processing means to determine, at each instant, the shifting of those values and pilote the variations in the movements of each oscillating welding torch by activating, each time the shifting in relation to the respective torch exceeds a preset limit, a drive means for orienting the torch so that the welding run is deposited in the centre of the throat of the groove.

GB 2 170 437 concerns a method of controlling a penetration bead in one-side welding which is capable of always ensuring an excellent penetration bead shape irrespective of variations in the conditions of a groove. This method consists in the control of welding parameter as the welding current, arc voltage, so as to maintain the electric impedance constant. A frequency oscillator of a constant current characteristics is used as a signal generator and during the welding, the voltage between base metals and a metal plate is detected and compared with a reference voltage thereby controlling the width of a penetration bead to become uniform.

All these documents refer to methods of controlling arc welding process but none take into account the defects of the ends to be assembled.

## SUMMARY OF THE INVENTION

The invention relates to a process according to claim 1 and a device according to claim 20.

A process for real-time assessment of the penetrating power of the electric welding arc during a butt weld penetration pass is disclosed. The penetrating power is defined as the ability of the electric arc to fuse the metal to be melted (usually referred to as the parent metal).

The purpose of the invention, based on real-time analysis of the welding arc waveforms (current, voltage), is to enable real-time assessment and adjustment of the welding arc penetrating power during the butt weld penetration pass.

The penetrating power changes constantly during the welding phase, and until now, welding current sources and waveform programming only took into consideration a mean penetrating power estimated for constant or steady state welding conditions (fit-up, chamfers). However, these conditions may change locally. Thus the piercing or collapse or burning through phenomenon is due to excessive welding arc penetrating power under given fit-up and local weld pool fluidity, and is detectable through real-time analysis of electrical parameters. Likewise, the lack of penetration phenomenon is due to a low welding arc penetrating power under given fit-up and local weld pool fluidity conditions, and is also detectable through real-time analysis of electrical parameters.

Both burning through and lack of penetration are unacceptable defects which require repair.

Sequential modes provide for different weld pool fluidity and penetrating powers (high velocity of the metal transferred during the Ipeak current) according to programming of the waveform parameters (current, voltage, frequency, and the like). However, for given programmed parameters, stabilizing penetration is difficult, owing to the critical character of the thermal balance (heat input/removal) obtained under good fit-up and chamfer conditions, and to the differences of power levels necessary to achieve correct penetration under poor fit-up conditions or with poorly machined chamfers.

The invention will enable the are mode and all the overall parameters of the installation to be slaved in real time so as to regulate the arc penetrating power and achieve constant penetration without backing or with backing (ceramics, copper, and the like) whether joint preparation is perfect or exhibits imperfections through the use of the voltage and the current of the welding machine.

## DESCRIPTION OF THE DRAWINGS

For further understanding of the nature and objects of the present invention, reference is had to the following drawings in which like parts are given like reference numerals and wherein:

Figure 1 is a side cross sectional view of two tubes forming a single-V groove (broad chamfer);
Figure 2 is a side cross sectional view of two tubes forming a single-U groove (narrow chamfer);
Figure 3 is a graphic display of voltage and current versus time for a welding machine in sequential mode: pure pulse;
Figure 4 is a graphic display of voltage and current versus time for a welding machine in sequential mode: controlled short-circuit;
Figure 5 is an end view of a motor driven welding unit of the prior art as shown mounted on the tube, partially in phantom line;
Figure 6 is a partial, side cross-sectional view in cross section of two tubes as in Figure 2, showing perfect fit-up;
Figure 7 is a partial, side cross sectional view of two tubes as in Figure 2 in step fit-up;
Figure 8 is a partial, side cross sectional view of two tubes as in Figure 2 showing fit-up with gap;
Figure 9 is a partial cross sectional view of two tubes as in Figure 2 showing fit-up with gap and step;
Figure 10 is a partial cross sectional view of a single tube showing the various aspects of the section;
Figure 11 is a graphic display of voltage and current waveforms versus time for a welding machine in mode-penetrating, non-piercing arc with low penetrating power;
Figure 12 shows a graph of voltage and current waveforms versus time for a welding machine in critical or high mode-piercing arc with high penetrating power, and illustrating different cases;
Figure 13 shows a graphic representation of the preferred embodiment of the present invention showing control of the various parameters of a welding machine.

## DESCRIPTION OF THE PREFERRED EMBODIMENT

### 1. Observation of waveforms in the case of a piercing arc and a non-piercing arc

A non-piercing arc is defined as an arc whose penetrating power is sufficient to fuse the parts to be joined (i.e. to ensure penetration), but whose pressure, created by the arc power, exerted on the weld pool does not eject the melted metal before solidification. Conversely, a piercing arc is defined as an arc with high penetrating power, whose power is too high and ejects the melted metal with a risk of creating gaps or bum-through (the arc is said to have pierced).

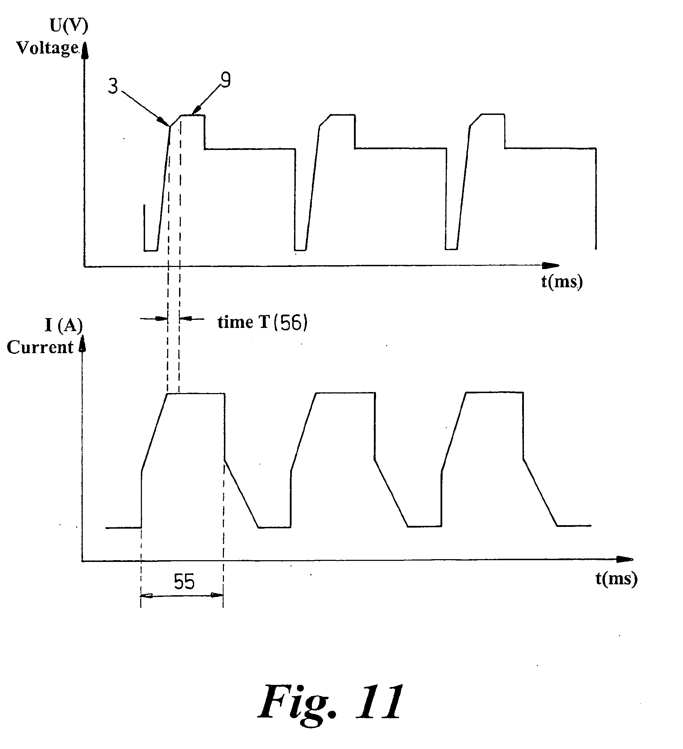

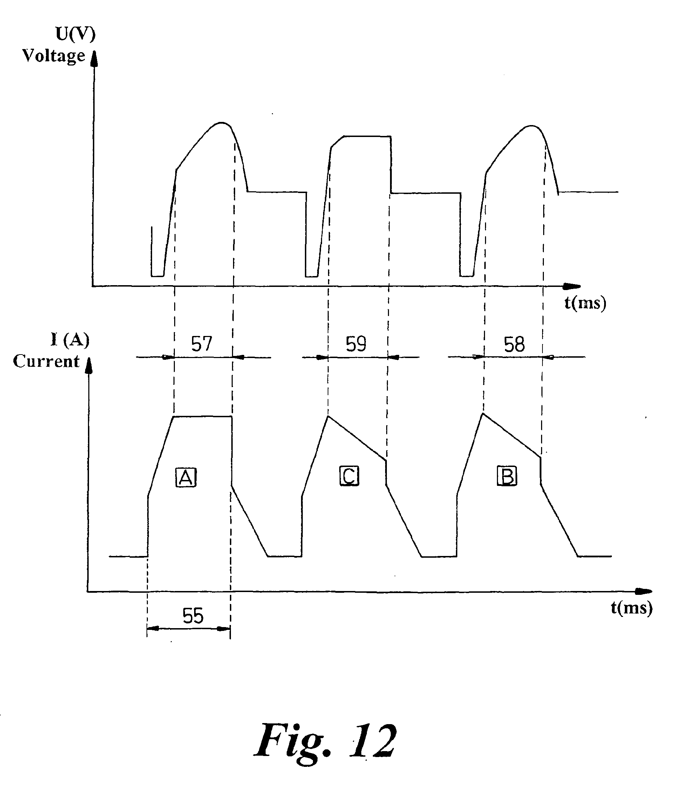

In the present invention, the voltage and current waveforms allow the electric arc penetration power to be determined (See Figures 11 and 12 for the extreme situation of lack of penetration potential (Figure 11), with $\Delta Z < \Delta Zo$ or $T < To$ and piercing (Figure 12) with $T > Tr$ or $\Delta Z > \Delta Zo$).

a. Normal mode - penetrating, non-piercing arc (Figure 11).
During the pulse phase 55, voltage U and current I remain near constant. Thus, the ratio U/I = Z (impedance of the wire + arc system) remains near constant during the pulse phase. Time T 56 to achieve maximum voltage-to-current ratio is very short.
b. Critical mode - piercing-arc (Figure 12).

(1) For the "a" portion of Figure 12, voltage increases during the pulse phase and current remains constant. The ratio U/I = Z increases between the beginning and the end of the pulse 55. Time T 57 to achieve maximum voltage-to-current ratio is long, and close to the pulse time (voltage rises slowly, which accounts for the fact that time T 57 becomes close to the pulse time).
(2) For the "b" portion of the Figure 12, voltage increases and current drops between the beginning and the end of the pulse phase 55. The ratio U/I increases between the beginning and the end of the pulse. The instantaneous current drops and the voltage increases during the pulse phase. Therefore time T 58 is also close to the pulse time.
(3) For the "c" portion of Figure 12, voltage remains near constant and current drops between the beginning and the end of the pulse phase 55. The ratio U/I increases between the beginning and the end of the pulse. The instantaneous current drops and voltage remains near constant during the pulse phase. Therefore, time T 59 is also close to the pulse time.

**2. Assessment of penetrating power**

Assessment is conducted using an electronic computer microprocessor 20 which provides general functions of reading instantaneous analog data 30 associated with the welding torch 11 operating on tube 12 with weld wire 25 forming arc 26, welding torch 11 mounted on welding unit 10 and connected to welding generator 14 and oscillator 16 and supporting wire 25 from reel 15. The analog data is converted to a digital representation 30 and then used in equations 31 discussed below to derive parameters from the data for calculations associated with time 32 for final calculation 33 of control signals. These signals are then converted from digital data to analog signals by a digital to analog converter 34. See Figure 13.

Several methods are available for assessing the arc penetrating power, in particular for detecting the time where the arc begins to pierce. As examples:

a. <u>Assessment mode No. 1 (Figure 13)</u>

Assessment is provided by the calculation of impedance, Z, of the wire 25 and arc 26 as a system during the pulse phase, through the equation:

Z = U/I, where Z is the impedance of the wire + arc system
I is the instantaneous current in the arc
U is the instantaneous voltage in the arc

Using an analog-to-digital converter 30, signals U and I taken from the electric arc 26 are acquired and processed. Then, using software-programmed equation the software 31 calculates impedance Z = U/I. The impedance is first measured at the beginning of the pulse, Z1; measurement starts at the time where voltage becomes equal to Upeak 3. When timer 32 expires, the impedance is measured a second time, Z2. The computer 70 then calculates the impedance variation, for example as follows:

$$\Delta Z = Z2 - Z1$$

$$\Delta Z\% = 100* (\Delta Z)/Z1$$

A mean of $\Delta Z\%$ and $\Delta Z$ can be obtained over several cycles.

A reference $\Delta Z$, i.e. $\Delta Zr$ and $\Delta Zr\%$, is set based on experience, corresponds to a penetrating arc (non-piercing) with a fit-up exhibiting gaps and/or offset.

The measured $\Delta Z$ is compared 33 to $\Delta Zr$ and $\Delta Zo$ by computer 70.

An offset impedence $\Delta Zo$, set based on experience, corresponds to a penetrating arc (non-piercing) under coasting conditions exhibiting no gap, with a thick root face or reduced lips 21, 22.

$\Delta Z\%$ measured $\geq \Delta Zr\%$ indicates that penetrating power is very high, and the arc is piercing.

$\Delta Z_o\% < \Delta Z\%$ measured $< \Delta Zr\%$ indicates that the arc is in a proper operating zone and not piercing. However, penetrating power is all the higher as $\Delta Z\%$ measured a high.

### 3. Assessment mode No. 2

Assessment is made by measuring the time since detection of Upeak 3 to achievement of Zmax (nulling of derivative dZ/dT).

The evolution of the wire + arc system impedance Z is measured by determining at what time the impedance Z is maximum Zmax 9.

Using the analog-to-digital converter 30, signals U and I taken from the electric arc 26 are acquired and processed. Then, using software-programmed equation 31, impedance Z = U/I is calculated.

Using a timer 32, time T is measured, i.e. the time between the beginning of the pulse and Zmax as calculated by computer 32 from the readings (which represents the nulling of derivative dZ/dT based on the curves of Figure 12). This time T is, as a maximum, equal to the pulse time.

A mean of T can be obtained over several weld metal transfer cycles.

An offset time To, set based on experience, corresponds to a penetrating arc (non piercing) under coasting conditions exhibiting no gaps, with a thick root face or reduced lip 21, 22. A reference time Tr is, set based on experience, and corresponds to a penetrating arc (non piercing) under coasting conditions exhibiting gaps and/or offset.

Tmeasured is compared by software 33, using the equations, to Tr and To.

Tmeasured $\geq$ Treference indicates that penetrating power is very high, and the arc is piercing.

To < Tmeasured < Tr indicates that the arc is in a proper operating zone and not piercing. However, the penetrating power is all the higher as T is high.

### 4. Regulation (See Figure 13)

In the preferred embodiment of the present invention, assessment of the electric arc penetrating power permits control to occur through command control micro-processor 70. The purpose of control is to increase the arc penetrating power when the arc penetrating power is low, and to reduce it when the arc is piercing.

    a. Control can be achieved by changing at least one of the parameters impacting the arc mode, such as Ipeak, Ibase, Upeak, and the like or parameters impacting the overall power level such as travel speed, and the like.

    b. <u>Control Principle</u>

A welding program is loaded to a PC 36 and stored in the EEPROM 35 for use with the data produced by the command-control micro-processor 70. This welding control program is determined as follows:

| Start values (0% of weld complete) | End values (100% of weld complete) | Action on |
|---|---|---|
| Ipeak$_d$<br>Ibase$_d$<br>Upeak$_d$<br>Ubase$_d$<br>Rise time$_d$<br>Peak time$_d$<br>Down ramp$_d$ | Ipeak$_f$<br>Ibase$_f$<br>Upeak$_f$<br>Ubase$_f$<br>Rise time$_f$<br>Peak time$_f$<br>Down ramp$_f$ | generator 14 |
| Wire feed rate$_d$ | Wire feed rate$_f$ | reel 15 |
| Oscillation$_d$ | Oscillation$_f$ | oscillator 16 |
| Welding unit speed$_d$ | Welding unit speed$_f$ | welding unit 10 |

End values correspond to an arc mode with little penetration allowing welding to be completed on fit-up defects or in case of variations of machined end dimensions (thin root face, wide lip 21, 22) without causing the arc to pierce while ensuring penetration.

Start values correspond to an arc mode with high penetration allowing penetration to be ensured when fit-up is perfect, or in case of variation of machined end dimensions (thick root face, narrow lip 21, 22).

The evolution between start values and end values may be linear, for example, using a 0 to 10 V analog datum for input 30 comparisons representation.

c. Control based on assessment mode No. 1

In the control system of the preferred embodiment, the analog signals from the digital-to-analog converter 34 are controlled by the comparison of $\Delta Z\%$ measured with $\Delta Z$ reference by the software equations 33.

If $\Delta Z\%$ measured $\leq 0$ then the analog signals are equal to 0V and the parameters are set to controls 10, 14-16 based on the start values stored in the EEPROM 35. If $0 \leq \Delta Z\%$ measured $\leq \Delta Z\%$ reference, the analog signals vary, for example in linear fashion, between values of 0 and 10V. For this range, the parameters vary for example in linear or proportional fashion between the start values and end values stored in the EEPROM 35.

If $\Delta Z\%$ measured $\geq \Delta Z\%$ reference, then the analog signals may be equal to 10V and the parameters are set based on the end values stored in the EEPROM 35.

d. Control based on assessment mode No. 2

In this control system, the analog signals from the digital-to-analog converter 34 are controlled by the comparison of Tmeasured with Treference and T offset, Tmeasured being provided by the software equations 33.

If Tmeasured $\leq$ To, i.e. one is at the beginning of the pulse, then the analog signals are equal to 0V and the parameters are set based on the start stored in the EEPROM 35.

If To $\leq$ Tmeasured $\leq$ Treference, the analog signal varies for example in linear fashion between 0 and 10V and the parameters vary, for example in linear or proportional fashion, between the start values and the end values stored in the EEPROM 35.

If Tmeasured $\geq$ Treference then the analogue signals may be equal to 10V and the parameters are set based on the end values stored in the EEPROM 35.

While the disclosure above is based on instantaneous readings of voltage and current, it is within the scope of this invention to control modification of certain parameters after 1 cycle or a train of cycles. Further control is not necessarily linear or proportional and may take into consideration, e.g. heavier weighing on the seniority of the last parameter change instructions established over the last cycle trains.

There are many variations within the invention herein taught and the disclosure is meant to be illustrative and not limiting.

**Claims**

1. A process comprising :

   a. Measuring variations in the instantaneous voltage and current of the torch during a weld metal transfer cycle ;
   b. Calculating from the measured variations in the instantaneous voltage and current during said cycle a measure of the power of penetration of the welding arc ;
   **characterized in that** the process is a process, performed for butt welding, for controlling the power of penetration of a welding arc when performing the penetration pass of two parts to be joined together, said process comprising the additional steps:
   c. Comparing said measure of the power of penetration of the welding arc to reference measure and offset measure set based on experience ; and d. Adjusting the torch (11) and welding machine parameters based on the comparison of the value of the calculated measure of penetration power to said measures set based on experience.

2. The process of Claim 1, wherein in said Step b, said calculation is performed with reference to variations in Z=U/I, where

   Z is the impedance of the wire + arc system
   I is the instantaneous current in the arc
   U is the instantaneous voltage in the arc.

3. The process of Claim 2, wherein in Step b the measure of penetration power is $\Delta Z = Z2 - Z1$, where Z2 and Z1 are measurements of U/I taken at different times during a single metal transfer cycle.

4. The process of Claim 3, wherein the value of the measure of penetrating power used in Step b is the value of $\Delta Z$ from a single cycle.

5. The process of Claim 1, wherein in said Step b, said calculation is performed with reference to the time T from the beginning of the pulse of the machine to reaching Zmax, wherein Zmax is the highest value of impedance over the pulse duration of the machine, the impedance being equal to U/I, wherein U is the voltage of the machine and I is the current of the machine.

6. The process of Claim 5, wherein the value of T used in Step b is the instantaneous value measured in a single cycle.

7. The process of Claim 3 or 5, wherein the value of the measure of $\Delta Z$ or T, as the case may be, used in Step b is the average value over a number of cycles.

8. The process of Claim 7, wherein any averages are weighted averages.

9. The process of Claim 8, wherein any weighted average favours more recent readings of U and I.

10. The process of any of Claims 3 to 9, wherein the welding machine operation is represented by a table of operating parameters and the measured value of $\Delta Z$ is compared to preset low and high values of $\Delta Z$; or the measured value of T is compared to preset low and high values of T, as the case may be.

11. The process of Claim 10, wherein the adjustment of Step d is based on values in the preset table corresponding to the measured value of $\Delta Z$ between said preset values or values in the preset table corresponding to the value of T, as the case may be.

12. The process of Claim 10, wherein the preset values of $\Delta Z$ limit the low and high values of $\Delta Z$ in the table or the preset values of T limit the low and high values of T in the table, as the case may be.

13. The process of any of Claims 10 to 12, wherein the values in the table are calculated proportionally to the value of $\Delta Z$ compared to the preset low and high values of $\Delta Z$ or the values in the table are calculated proportionally to the value of T compared to the preset low and high values of T, as the case may be, for said adjustment of Step d.

14. The process of any preceding claim performed for orbital butt welding of pipes.

15. The process of Claim 14, wherein the penetration pass is performed without a backing ring.

16. The process of Claim 14 or 15, wherein the penetration pass is performed from the outside.

17. The process of any preceding claim wherein there are multiple torches and each torch independently follows Step a, b, c and d.

18. The process as claimed in any preceding claim, wherein the welding uses the MIG/MAG process.

19. The process as claimed in any of Claims 14 to 18, wherein Step d adjustment enables the assessment of the electric arc penetrating power when the torch is inside the tube.

20. An apparatus (70) comprising : a. an arc welding power source able to produce a sequential waveform of current and of voltage, in a controlled-short-circuit mode,

b. means (30) for measuring variations in the instantaneous voltage and current at the welding torch during a cycle,
c. means (31, 32) for calculating from said variations in the instantaneous voltage and current a measure of the power of penetration of the arc when welding said penetration pass of said two parts to be welded together, **characterized in that** the apparatus is an apparatus, for butt welding, for controlling in real-time the power of penetration of a welding arc (26) when performing the penetration pass of two parts to be joined together, said welding arc (26) being produced between a welding torch (11) and a metal wire in successive weld metal transfer cycles, said apparatus also comprising :

d. means (33, 34) for comparing said measure of the power of penetration of the welding arc to reference measure and offset measure set based on experience, and e. means (35, 36) for adjusting in real-time, at least one parameter of the welding system, said adjustment being based on said comparison of measurement of penetration power to said measures set based on experience.

21. The apparatus of Claim 20, wherein means c is operable such that said calculation measures variations in Z=U/I, where

Z is the impedance of the wire + arc system
I is the instantaneous current in the arc
U is the instantaneous voltage in the arc.

22. The apparatus of Claim 21, operable such that said calculation measures $\Delta Z=Z2-Z1$, where Z2 and Z1 are measurements of U/I taken at different times during a single metal transfer cycle.

23. The apparatus of Claim 22, wherein means c is operable such that the measure of penetration power is the value of $\Delta Z$ from a single cycle.

24. The apparatus of Claim 20 or 21, wherein means c is operable such that the calculated measure is the time T from the beginning of the pulse of the machine to reaching Zmax, wherein Zmax is the highest value of impedance over the pulse duration of the machine, the impedance being equal to U/I, wherein U is the voltage of the machine and I is the current of the machine.

25. The apparatus of Claim 24, wherein means c is operable such that the measure of power of penetration is the instantaneous value measuredin a single cycle.

26. The apparatus of Claim 22 or 24, wherein means c is operable such that the measure of $\Delta Z$ or T, as the case may be is the average value over a number of cycles.

27. The apparatus of Claim 26, wherein any averages are weighted averages.

28. The apparatus of Claim 27, wherein any weighted averages favours more recent readings of U and I.

29. The apparatus of any of Claims 21 to 28, wherein in operation the welding machine operation is represented by a table of operating parameters and the measured value of $\Delta Z$ is compared to preset low and high values of $\Delta Z$ or the measured value of T is compared to preset low and high values of T, as the case may be.

30. The apparatus of Claim 29, wherein means e is operable such that the adjustment is based on values in the preset table corresponding to the measured value of $\Delta Z$ or to the value of T, as the case may be.

31. The apparatus of Claim 30, wherein the preset values of $\Delta Z$ limit the low and high values of $\Delta Z$ or the preset values of T limit the low and high values of T in the table, as the case may be.

32. The apparatus of any of Claims 29 to 31, wherein means e is operable such that the adjustment is based on values in the table which are calculated proportionally to the value of $\Delta Z$ compared to the preset low and high values of $\Delta Z$ or values in the table which are calculated proportionally to the value of T compared to the preset low and high values of T, as the case may be.

33. The apparatus of any Claims 20 to 32, adapted for orbital butt welding of pipes.

34. The apparatus of Claim 33 adapted for performing a penetration pass from the outside.

35. The apparatus as claimed in any of Claims 20 to 32, wherein the welding uses the MIG/MAG process.

**Patentansprüche**

1. Verfahren mit:

   a. Messen von Änderungen in der momentanen Spannung und Stromstärke des Schweißbrenners während einer Schweißmetall-Transferperiode;

   b. Berechnen eines Maßes der Durchdringungsleistung des Schweißlichtbogens aus den gemessenen Änderungen in der momentanen Spannung und Stromstärke während der Periode;

   **dadurch gekennzeichnet, dass** das Verfahren ein für Stumpfschweißen durchgeführtes Verfahren zur Steuerung der Durchdringungsleistung eines Schweißlichtbogens beim Ausführen der Durchdringungsschweißlage von zwei miteinander zu verbindenden Teilen ist, wobei das Verfahren die zusätzlichen Schritte aufweist:

   c. Vergleichen des Maßes der Durchdringungsleistung des Schweißlichtbogens mit einem auf Erfahrung basierenden Bezugsmaß- und Ausgleichsmaß-Satz; und

   d. Einstellen der Parameter des Schweißbrenners (11) und der Schweißmaschine basierend auf dem Vergleich des Wertes des berechneten Durchdringungsleistungs-Maßes mit den auf Erfahrung basierenden Satz von Maßen.

2. Verfahren nach Anspruch 1, wobei in dem Schritt b die Berechnung mit Bezug auf Änderungen bei Z = U/I durchgeführt wird, wobei

   Z = die Impedanz des Draht-/Lichtbogensystems
   I = die momentane Stromstärke in dem Lichtbogen
   U = die momentane Spannung in dem Lichtbogen.

3. Verfahren nach Anspruch 2, wobei im Schritt b das Durchdringungsleistungs-Maß $\Delta Z = Z_2 - Z_1$ ist, wobei $Z_2$ und $Z_1$ Messungen von U/I sind, die zu unterschiedlichen Zeiten während einer einzelnen Metalltransferperiode genommen sind.

4. Verfahren nach Anspruch 3, wobei der Wert des Durchdringungsleistungs-Maßes, der in Schritt b verwendet wird, der Wert $\Delta Z$ aus einer einzelnen Periode ist.

5. Verfahren nach Anspruch 1, wobei in dem Schritt b die Berechnung mit Bezug auf die Zeit T vom Beginn des Impulses der Maschine bis zum Erreichen von $Z_{max}$ ausgeführt wird, wobei $Z_{max}$ der größte Impedanz-Wert über die Impulsdauer der Maschine ist, wobei die Impedanz gleich U/I ist, wobei U die Spannung der Maschine und I die Stromstärke der Maschine ist.

6. Verfahren nach Anspruch 5, wobei der Wert T, der in Schritt b verwendet wird, der in einer einzelnen Periode gemessene momentane Wert ist.

7. Verfahren nach Anspruch 3 oder 5, wobei der Wert des Maßes $\Delta Z$ oder gegebenenfalls T, die im Schritt b verwendet werden, das Durchschnittsmaß über eine Anzahl von Perioden ist.

8. Verfahren nach Anspruch 7, wobei jegliche Durchschnittswerte gewichtete Durchschnittswerte sind.

9. Verfahren nach Anspruch 8, wobei jeglicher gewichtete Durchschnittswert jüngere Messwerte von U und I favorisiert.

10. Verfahren nach einem der Ansprüche 3 bis 9, wobei der Schweißmaschinenbetrieb mittels einer Tabelle von Betriebsparameter repräsentiert wird und der gemessene Wert $\Delta Z$ mit voreingestellten geringen und hohen Werten von $\Delta Z$ verglichen wird; oder gegebenenfalls der gemessene Wert T mit voreingestellten geringen und hohen Werten von T verglichen wird.

11. Verfahren nach Anspruch 10, wobei die Einstellung in Schritt d auf Werten in der Voreinstell-Tabelle, die mit dem gemessenen Wert $\Delta Z$ zwischen den Voreinstell-Werten korrespondieren, oder gegebenenfalls auf Werten in der Voreinstell-Tabelle gestützt ist, die mit dem Wert T korrespondieren.

12. Verfahren nach Anspruch 10, wobei die Voreinstell-Werte $\Delta Z$ die unteren und oberen Werte von $\Delta Z$ in der Tabelle begrenzen, oder gegebenenfalls die Voreinstell-Werte von T die oberen und unteren Werte von T in der Tabelle begrenzen.

**13.** Verfahren nach einem der Ansprüche 10 bis 12, wobei für die Einstellung im Schritt d die Werte in der Tabelle proportional zum Wert $\Delta Z$ im Vergleich zu den voreingestellten niedrigen und hohen Werten von $\Delta Z$ berechnet werden, oder gegebenenfalls die Werte in der Tabelle proportional zu dem Wert T im Vergleich zu den voreingestellten niedrigen und hohen Werten von T berechnet werden.

**14.** Verfahren nach einem der vorhergehenden Ansprüche, das für ein Orbital-Stumpfschweißen von Rohren durchgeführt wird.

**15.** Verfahren nach Anspruch 14, wobei die Durchdringungsschweißlage ohne einen Stützring durchgeführt wird.

**16.** Verfahren nach Anspruch 14 oder 15, wobei die Durchdringungsschweißlage von der Außenseite durchgeführt wird.

**17.** Verfahren nach einem der vorhergehenden Ansprüche, wobei eine Vielzahl von Schweißbrennern vorgesehen sind und jeder Schweißbrenner unabhängig den Schritten a, b, c und d folgt.

**18.** Verfahren nach einem der vorhergehenden Ansprüche, wobei im Schweißen ein MIG/MAG-Vertahren verwendet wird.

**19.** Verfahren nach einem der Ansprüche 14 bis 18, wobei die Einstellung gemäß Schritt d die Abschätzung der elektrischen Schweißbogen-Durchdringungsleistung ermöglicht, wenn der Schweißbrenner innerhalb des Rohres ist.

**20.** Vorrichtung (70) mit:

a. einer Lichtbogenschweißenergiequelle, die in der Lage ist, eine aufeinanderfolgende Wellenform von Stromstärke und Spannung zu erzeugen, und zwar in einem Betriebsmoduls mit gesteuertem Kurzschluss,
b. einer Einrichtung (30) zum Messen von Änderungen in der momentanten Spannung und Stromstärke am Schweißbrenner während einer Periode,
c. eine Einrichtung (31, 32) zum Berechnen eines Durchdringungsleistungs-Maßes des Lichtbogens aus den Änderungen in der momentanen Spannung und Stromstärke, wenn die Durchdringungsschweißlage der beiden miteinander zu verschweißenden Teile geschweißt wird,
**dadurch gekennzeichnet, dass** die Vorrichtung eine Stumpfschweißvorrichtung zum Echtzeit-Steuern der Durchdringungsleistung eines Schweißlichtbogens (26) beim Ausführen der Durchdringungsschweißlage der beiden miteinander zu verbindenden Teile ist, wobei der Schweißlichtbogen (26) zwischen einem Schweißbrenner (11) und einem Metalldraht in aufeinanderfolgenden Schweißmetalltransferperioden erzeugt wird, wobei die Vorrichtung zusätzlich aufweist:
d. eine Einrichtung (33, 34) zum Vergleich des Durchdringungsleistungs-Maßes des Schweißlichtbogens mit einem auf Erfahrung basierenden Bezugsmaß- und Ausgleichsmaß-Satz, und
e. eine Einrichtung (35, 36) zum Echtzeit-Einstellen von zumindest eines Parameters des Schweißsystems, wobei die Einstellung auf den Vergleich einer Messung der Durchdringungsleistung mit dem Satz von auf Erfahrung basierenden Maßen gestützt ist.

**21.** Vorrichtung nach Anspruch 20, wobei die Einrichtung c derart betätigbar ist, dass die Berechnung Änderungen in Z = U/I misst, wobei
Z = die Impedanz des Draht-/Lichtbogensystems
I = die momentane Stromstärke im Lichtbogen
U = die momentane Spannung im Lichtbogen.

**22.** Vorrichtung nach Anspruch 21, welche derart betätigbar ist, dass die Berechnung $\Delta Z = Z2 - Z1$ misst, wobei Z2 und Z1 Messungen von U/I sind, die zu unterschiedlichen Zeiten während einer einzelnen Metalltransferperiode genommen sind.

**23.** Vorrichtung nach Anspruch 22, wobei die Einrichtung c derart betätigbar ist, dass das Durchdringungsleistungsmaß der Wert $\Delta Z$ aus einer einzelnen Periode ist.

**24.** Vorrichtung nach Anspruch 20 oder 21, wobei die Einrichtung c derart betätigbar ist, dass das berechnete Maß die Zeit T von Beginn des Impulses der Maschine bis zum Erreichen von Zmax ist, wobei Zmax der größte Impedanzwert über die Impulsdauer der Maschine ist, wobei die Impedanz gleich U/I ist, wobei U die Spannung der Maschine und I die Stromstärke der Maschine ist.

**25.** Vorrichtung nach Anspruch 24, wobei die Einrichtung c derart betätigbar ist, dass das Durchdringungsleistungs-Maß der momentane Wert ist, der in einer einzelnen Periode gemessen ist.

**26.** Vorrichtung nach Anspruch 22 oder 24, wobei die Einrichtung c derart betätigbar ist, dass der Wert ΔZ oder gegebenenfalls T der Durchschnittswert über eine Anzahl von Perioden ist.

**27.** Vorrichtung nach Anspruch 26, wobei jegliche Durchschnittswerte gewichtete Durchschnittswerte sind.

**28.** Vorrichtung nach Anspruch 27, wobei jegliche gewichtete Durchschnittswerte jüngere Messwerte von U und I favorisieren.

**29.** Vorrichtung nach einem der Ansprüche 21 bis 28, wobei im Betrieb der Schweißmaschinenbetrieb mittels einer Tabelle von Betriebsparametern repräsentiert ist und der gemessene Wert von ΔZ mit voreingestellten geringen und hohen Werten von ΔZ oder gegebenenfalls der gemessene Wert P mit voreingestellten geringen und hohen Werten von T verglichen wird.

**30.** Vorrichtung nach Anspruch 29, wobei die Einrichtung e derart betätigbar ist, dass die Einstellung auf Werten in der Voreinstell-Tabelle gestützt ist, die mit dem gemessenen Wert ΔZ oder gegebenenfalls mit dem Wert T korrespondieren.

**31.** Vorrichtung nach Anspruch 30, wobei die voreingestellten Werte von ΔZ die geringen und hohen Werte von ΔZ oder gegebenenfalls die voreingestellten Werte von T die geringen und hohen Werte von T in der Tabelle begrenzen.

**32.** Vorrichtung nach einem der Ansprüche 29 bis 31, wobei die Einrichtung e derart betätigbar ist, dass die Einstellung auf Werte in der Tabelle, die proportional zum Wert ΔZ im Vergleich zu den voreingestellten niedrigen und hohen Werten von ΔZ berechnet werden, oder gegebenenfalls auf Werte in der Tabelle gestützt ist, die proportional zu dem Wert T im Vergleich zu den voreingestellten niedrigen und hohen Werten von T berechnet werden.

**33.** Vorrichtung nach einem der Ansprüche 20 bis 32, die für ein Orbital-Stumpfschweißen von Rohren angepasst ist.

**34.** Vorrichtung nach Anspruch 33, die zum Ausführen einer Durchdringungsschweißlage von der Außenseite angepasst ist.

**35.** Vorrichtung nach einem der Ansprüche 20 bis 32, wobei im Schweißen ein MIG/MAG-Verfahren verwendet wird.

**Revendications**

**1.** Procédé comprenant les étapes consistant à :

a. mesurer des variations dans la tension et le courant instantanés de la torche durant un cycle de transfert de métal de soudage ;
b. calculer à partir des variations mesurées dans la tension et le courant instantanés durant ledit cycle une mesure de puissance de pénétration de l'arc de soudage ;
**caractérisé en ce que** le procédé est un procédé, mis en oeuvre pour un soudage bout à bout, pour contrôler la puissance de pénétration d'un arc de soudage lorsqu'on effectue la passe de pénétration de deux parties devant être jointes ensemble, ledit procédé comprenant les étapes additionnelles consistant à :
c. comparer ladite mesure de puissance de pénétration de l'arc de soudage à une mesure de référence et à une mesure de décalage fixé sur la base de l'expérience ; et d. ajuster la torche (11) et les paramètres de machine de soudage sur la base de la comparaison de la valeur de la mesure calculée de la puissance de pénétration auxdites mesures fixées sur la base de l'expérience.

**2.** Procédé selon la revendication 1, dans lequel dans l'étape b, ledit calcul est exécuté en référence aux variations dans $Z = U/I$, où

$Z$ est l'impédance du système fil + arc
$I$ est le courant instantané dans l'arc
$U$ est la tension instantanée dans l'arc.

**3.** Procédé selon la revendication 2, dans lequel dans l'étape b, la mesure de puissance de pénétration est $\Delta Z = Z2 - Z1$, où $Z2$ et $Z1$ sont des mesures de U/I prises à différents moments durant un seul cycle de transfert de métal.

**4.** Procédé selon la revendication 3, dans lequel la valeur de la mesure de puissance de pénétration utilisée dans l'étape b est la valeur de $\Delta Z$ à partir d'un seul cycle.

**5.** Procédé selon la revendication 1, dans lequel, dans l'étape b, ledit calcul est mis en oeuvre en référence au temps T depuis le début de l'impulsion de la machine pour atteindre Zmax, où Zmax est la valeur la plus élevée de l'impédance sur la durée d'impulsion de la machine, l'impédance étant égale à U/I, où U est la tension de la machine et I est le courant de la machine.

**6.** Procédé selon la revendication 5, dans lequel la valeur de T utilisée dans l'étape b est la valeur instantanée mesurée dans un seul cycle.

**7.** Procédé selon la revendication 3 ou 5, dans lequel la valeur de la mesure de $\Delta Z$ ou T, selon le cas, utilisée dans l'étape b est la valeur moyenne sur un nombre de cycles.

**8.** Procédé selon la revendication 7, dans lequel toutes moyennes sont des moyennes pondérées.

**9.** Procédé selon la revendication 8, dans lequel toutes moyennes pondérées privilégient les lectures les plus récentes de U et de I.

**10.** Procédé selon l'une quelconque des revendications 3 à 9, dans lequel le fonctionnement de la machine de soudage est représenté par une table de paramètres de fonctionnement et la valeur mesurée de $\Delta Z$ est comparée à des valeurs inférieure et supérieure prédéfinies de $\Delta Z$ ou la valeur mesurée de T est comparée à des valeurs prédéfinies inférieure et supérieure de T, selon le cas.

**11.** Procédé selon la revendication 10, dans lequel l'ajustement de l'étape d est basée sur des valeurs dans la table prédéfinie correspondant à la valeur mesurée de $\Delta Z$ entre lesdites valeurs prédéfinies ou des valeurs dans la table prédéfinie correspondant à la valeur de T, selon le cas.

**12.** Procédé selon la revendication 10, dans lequel les valeurs prédéfinies de $\Delta Z$ limitent les valeurs inférieure et supérieure de $\Delta Z$ dans la table ou les valeurs prédéfinies de T limitent les valeurs inférieure et supérieure de T dans la table, selon le cas.

**13.** Procédé selon l'une des revendications 10 à 12, dans lequel les valeurs dans la table sont calculées proportionnellement à la valeur de $\Delta Z$ comparée aux valeurs inférieure et supérieure prédéfinies de $\Delta Z$ ou les valeurs dans la table sont calculées proportionnellement à la valeur de T comparée aux valeurs inférieure et supérieure de T, selon le cas, pour ledit ajustement de l'étape d.

**14.** Procédé selon l'une quelconque des revendications précédentes mis en oeuvre pour le soudage bout à bout orbital de conduits.

**15.** Procédé selon la revendication 14, dans lequel la passe de pénétration est mise en oeuvre sans bague d'appui.

**16.** Procédé selon la revendication 14 ou 15, dans lequel la passe de pénétration est mise en oeuvre depuis l'extérieur.

**17.** Procédé selon l'une quelconque des revendications précédentes, dans lequel il y a de multiples torches et chaque torche suit indépendamment les étapes a, b, c et d.

**18.** Procédé tel que revendiqué selon l'une quelconque des revendications précédentes, dans lequel le soudage utilise le procédé MIG/MAG.

**19.** Procédé tel que revendiqué selon l'une quelconque des revendications 14 à 18, dans lequel l'étape d d'ajustement rend possible l'évaluation de la puissance de pénétration d'arc électrique lorsque la torche est à l'intérieur du tube.

**20.** Appareil (70) comprenant :

a. une source de puissance de soudage à l'arc capable de produire une forme d'onde séquentielle de courant et de tension, dans un mode de court-circuit contrôlé,

b des moyens (30) pour mesurer des variations dans la tension et le courant instantanés à la torche de soudage durant un cycle,

c. des moyens (31, 32) pour calculer à partir desdites variations dans la tension et le courant instantanés une mesure de puissance de pénétration de l'arc lors du soudage de ladite passe de pénétration de deux parties devant être jointes ensemble,

**caractérisé en ce que** l'appareil est un appareil de soudage bout à bout, pour contrôler en temps réel la puissance de pénétration d'un arc de soudage (26), lorsqu'est réalisée la passe de pénétration de deux parties devant être jointes ensemble, ledit arc de soudage (26) étant produit entre une torche de soudage (11) et un fil de métal dans des cycles de transfert de métal de soudage successifs, ledit appareil comprenant également :

d. des moyens (33, 34) pour comparer ladite mesure de puissance de pénétration de l'arc de soudage avec une mesure référence et une mesure de décalage fixée sur la base de l'expérience, et

e. des moyens (35, 36) pour ajuster en temps réel, au moins un paramètre du système de soudage, ledit ajustement étant basé sur ladite comparaison de mesure de puissance de pénétration avec lesdites mesures fixées sur la base de l'expérience.

21. Appareil selon la revendication 20, dans lequel des moyens c sont utilisables de sorte que ledit calcul mesure des variations dans Z=U/I, où

Z est l'impédance du système fil + arc
I est le courant instantané dans l'arc
U est la tension instantanée dans l'arc.

22. Appareil selon la revendication 21, utilisable de sorte que le calcul mesure $\Delta Z = Z2 - Z1$, où Z2 et Z1 sont des mesures de U/I prises à différents moments durant un seul cycle de transfert de métal.

23. Appareil selon la revendication 22, dans lequel des moyens c sont utilisables de sorte que la mesure de puissance de pénétration est la valeur de $\Delta Z$ à partir d'un seul cycle.

24. Appareil selon la revendication 20 ou 21, dans lequel des moyens c sont utilisables de sorte que la mesure calculée est le temps T depuis le début de l'impulsion de la machine pour atteindre Zmax, où Zmax est la valeur la plus élevée de l'impédance sur la durée d'impulsion de la machine, l'impédance étant égale à U/I, où U est la tension de la machine et I est le courant de la machine.

25. Appareil selon la revendication 24, dans lequel des moyens c sont utilisables de sorte que la mesure de puissance de pénétration est la valeur instantanée mesurée dans un seul cycle.

26. Appareil selon la revendication 22 ou 24, dans lequel les moyens c sont utilisables de sorte que la mesure de $\Delta Z$ ou T, selon le cas, est la valeur moyenne sur un nombre de cycles.

27. Appareil selon la revendication 26, dans lequel toutes moyennes sont des moyennes pondérées.

28. Appareil selon la revendication 27, dans lequel toutes moyennes pondérées privilégient les lectures les plus récentes de U et de I.

29. Appareil selon l'une quelconque des revendications 21 à 28, dans lequel en fonctionnement, le fonctionnement de la machine de soudage est représenté par une table de paramètres de fonctionnement et la valeur mesurée de $\Delta Z$ est comparée à des valeurs inférieure et supérieure prédéfinies de $\Delta Z$ ou la valeur mesurée de T est comparée à des valeurs prédéfinies inférieure et supérieure de T, selon le cas.

30. Appareil selon la revendication 29, dans lequel des moyens e sont utilisables de sorte que l'ajustement est basée sur des valeurs dans la table prédéfinie correspondant à la valeur mesurée de $\Delta Z$ ou à la valeur de T, selon le cas.

31. Appareil selon la revendication 30, dans lequel les valeurs prédéfinies de $\Delta Z$ limitent les valeurs inférieure et supérieure de $\Delta Z$ ou les valeurs prédéfinies de T limitent les valeurs inférieure et supérieure de T dans la table, selon le cas.

32. Appareil selon l'une des revendications 29 à 31, dans lequel des moyens e sont utilisables de sorte que l'ajustement est basé sur des valeurs dans la table qui sont calculées proportionnellement à la valeur de $\Delta Z$ comparée aux

valeurs inférieure et supérieure prédéfinies de $\Delta Z$ ou sur des valeurs dans la table qui sont calculées proportionnellement à la valeur de T comparée aux valeurs inférieure et supérieure de T, selon le cas.

33. Appareil selon l'une quelconque des revendications 20 à 32, adapté au soudage bout à bout orbital de conduits.

34. Appareil selon la revendication 33, adapté pour mettre en oeuvre une passe de pénétration depuis l'extérieur.

35. Appareil selon l'une quelconque des revendications 20 à 32, dans lequel le soudage utilise le procédé MIG/MAG.

13

50

*Fig. 1*

13

50

*Fig. 2*

**Fig. 3**

**U (V)**
**Voltage**

3   9

Short-circuit   4

**I (A)**
**Current**

1   6   5   7

2   8

1 Cycle

t(ms)

t(ms)

*Fig. 4*

**Fig. 5**

*Fig. 6*

*Fig. 7*

*Fig. 8*

*Fig. 9*

20

21

22

*Fig. 10*

Fig. 11

*Fig. 12*

*Fig. 13*

**EP 1 419 027 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6248976 B
- WO 0038872 A
- GB 2170437 A